# EUROPEAN PATENT SPECIFICATION

(11) **EP 2 184 663 B1**
(45) Date of publication and mention of the grant of the patent: **10.07.2013**
(21) Application number: 09175379.8
(22) Date of filing: 09.11.2009
(51) Int. Cl.: G06F 1/26, G06F 13/40

(54) **A method for compensation of USB output voltage**
Verfahren zum Ausgleichen der USB-Ausgangsspannung
Procédé de compensation de tension de sortie USB

(30) Priority: 11.11.2008 TR 200808536
(43) Date of publication of application: 12.05.2010
(73) Proprietor: Vestel Elektronik Sanayi ve Ticaret A.S., 45030 Manisa (TR)
(72) Inventor: Basarir, Cenk, 45030 Manisa (TR)
(74) Representative: Cayli, Hülya

(56) References cited:
- WO-A2-03/100545

## Description

### Field of the invention

This invention is related to a method for compensation of output voltage of a data bus (to which a peripheral device is connected) that provides communication between a computer and a peripheral device connected to said computer; more specifically, it is related to a method for keeping the USB output voltage above a standard lower limit.

### Prior Art

USB interface (Universal Serial Bus) is a serial connection which enables communication of external hardware such as a digital camera, scanner, mouse or keyboard with a main computer. USB interface, which is used for connection of several devices due to its plug and play feature, enables identification and automatic working of peripheral devices as soon as they are connected to the computer.

In the systems that we use today, generally a power supply provides approximately 5 Volts to the USB interface. The peripheral devices that are connected to the USB outlet are supplied by this voltage.

According to the USB 2.0 standard, operating voltage of the USB interface should be between 4.75 and 5.25 Volts. In cases where the said USB output voltage is not in the specified limits, USB interface can not ensure a normal operation between the peripheral device and the computer to which the peripheral device is connected.

In some cases USB output voltage may drop below the lower limit given above due to the various voltage losses occurring in the connection line. In order to keep this voltage drop at a minimum level, USB cables are made as short as possible or the cross sectional area of the wires are increased to decrease the internal resistance of the power supply cables. However in practice these methods are not sufficient and physically limit the use of peripheral devices. Various methods and systems have been developed to compensate the voltage drop occurring at the USB output due to the reasons stated above. Patent Application published under No. EP1553480 discloses a data bus power supply control method and accordingly the current / voltage levels supplied from the USB output of a device to which a peripheral device is connected are detected by sensors, these detected USB output current / voltage levels are compared with a threshold current and voltage value, according to this comparison if the current or the voltage is below the threshold value, required current or voltage is provided by an auxiliary power supply included in the system, thus the supply current and voltage of the peripheral are kept above a certain level. However, since the said method and the system in which this method is implied require an additional power supply, it causes higher costs.

In another patent application with number W003100545A2 discloses an electronic device and USB circuit arrengment. In this document, electronic device comprises a power supply, a voltage regulator and a universal serial bus controller. Said voltage regulator is coupled with power supply and it provides regulated voltage to a number of components. Said universal serial bus controller is coupled with voltage regulator via a differential data line and a bus voltage line. By this configuration, voltage of the differential data line becomes higher than the output voltage of the regulator.

### Object of the invention

The object of this invention is to provide a method which solves the disadvantages stated above to compensate the output voltage of a data bus.

### Brief description of the figures

Figure 1 gives a sample circuit diagram which shows the voltage drop occurring for various reasons on the USB (Universal Serial Bus) connection between the power supply and the output voltage.
Figure 2 gives a sample circuit diagram which shows an implementation of the method of the invention on the USB connection shown in Figure 1.

The reference numbers as used in figures may possess the following meanings;

| | |
|---|---|
| Power supply | (1) |
| Switch | (2) |
| USB output | (3) |
| Controller | (4) |
| Feedback input | (5) |
| Fault flag pin | (6, 8) |
| Enable pin | (7) |
| ADC pin | (10) |
| DAC pin | (11) |

### Detailed description of the invention

Said output voltage should be in a standard range for the devices fed by the USB output voltage to have an error-free connection with the computers to which they are connected and to work without being damaged (for example, USB output voltage should be between 4.75 - 5.25 Volts according to USB 2.0 Standard). If the supply voltage received from the USB output is below a minimum voltage value, the device connected to this output will not turn on or if the voltage is above a certain level there is a chance that the device may be damaged.

The output voltage supplied to the devices which are fed by the USB output may drop below levels lower than the 4.75 Volts which is the lowest voltage level that is required for the device to work properly (and which is defined by the standards) due to the internal losses and the losses in the USB cable.

This invention is related to a method and system which provide control and compensation of USB output voltage in order to prevent the USB output voltage from dropping below the 4.75 Volts lower limit.

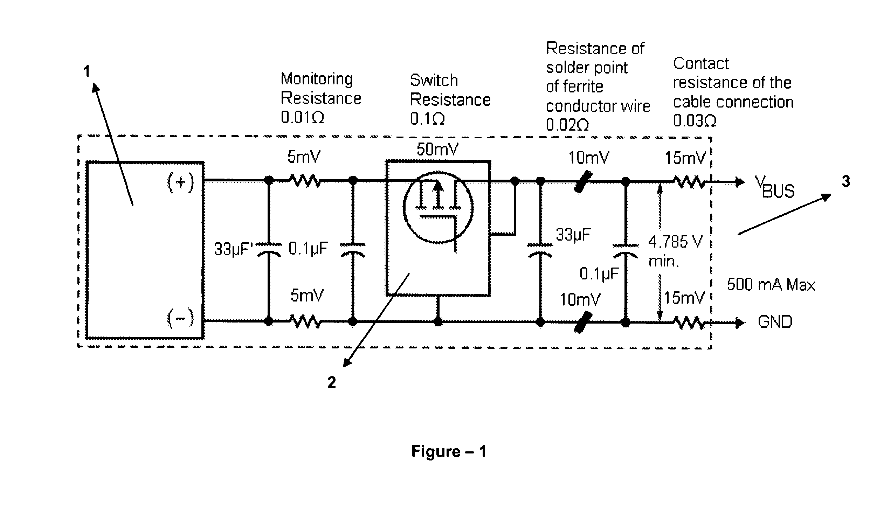

Figure 1 is a sample circuit diagram which shows the voltage losses occurring on a USB connection. As shown in Figure 1, USB output voltage (V_{BUS}) drops between the power supply (1) and the USB output (connection point) (3) due to the resistance of PCB (Printed Circuit Board) lines, resistance of the implemented serial ferrite conductor wires, resistance of the solder joints and the resistance of the communication channels used between the PCB layers and due to the losses of the devices fed by the USB on USB connection points (3) and most of the time the peripherals don't work since there is not enough voltage during initial operation.

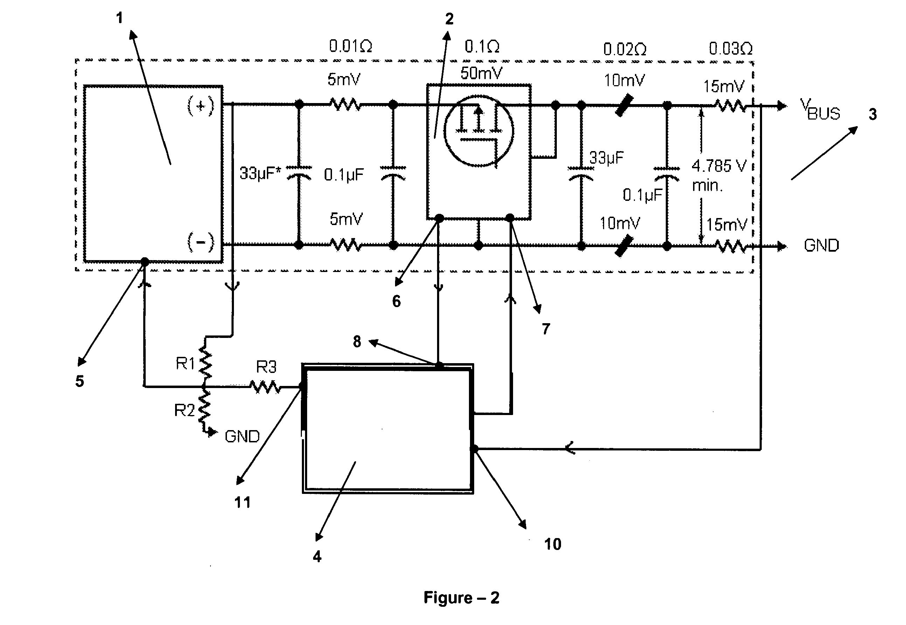

A sample circuit diagram in which the method of the invention is used is given in Figure 2. As shown in Figure 2, a controller (main computer controller) (4) located between the USB output (3) and the power supply (1) controls a switch (2) which is located on the USB connection and which provides the connection between the power supply (1) and the USB output (3). The ADC pin (10) of the controller (4) is connected to the USB output voltage (V_{BUS}) and can detect the output voltage by a feedback received from this output. The DAC pin (11) of the controller is connected to the feedback input (5) of the power supply with at least one resistance (R3) and provides a feedback which enables control of output voltage (V_{OUT}) of the power supply (1).

In its initial state, the system does not intervene in the USB output voltage (V_{BUS}) (before an error occurs in the communication), in other words it does not apply any voltage to the feedback pin (5) of the power supply (1) or it applies feedback reference voltage. In its initial state, DAC pin (11) of the controller (4) will show a high impedance or it will apply the feedback reference voltage of the power supply (1) to the feedback point (5) of the power supply (1) through at least one resistance (R3); therefore the output voltage (V_{OUT}) of the power supply (1) will be kept at the reference value. Said power supply feedback reference voltage is a feedback voltage value which ensures keeping the output voltage (V_{OUT}) from the said power supply at a previously specified standard value (e.g. 5 V).

In the case that there is a problem in the communication between the device connected to the computer and the computer, an error signal will be sent from the "fault flag" pin (6) of the USB switch (2) to the "fault flag" pin (8) of the controller. By this received error signal, the controller (4) will detect that there is an error in the communication, it will turn off the USB switch (2) by sending signal to the "enable" pin (7) of this switch (2), USB device will have no power and then the USB switch (2) will be turned on by the controller (4) again. The voltage information taken from the USB output (V_{BUS}) will reach the ADC pin (10) of the controller (4), the controller (4) will detect that the output voltage (V_{BUS}) is below the threshold value and the controller (4) will increase the power supply output (V_{OUT}) to 5.25 Volts by changing the voltage it applies to the feedback point (5) of the power supply (1). Therefore, since 5.25 Volts is applied to the starting point of the USB interface, supply voltage (V_{BUS}) reaching the USB device will stay between the tolerance limits even if there are losses and the losses until the USB output (3) will be compensated.

In the case that communication can not be re-established at the end of these procedures, this procedure will not be repeated, the user will be notified that the communication can not be established and the power supply output voltage will be set to 5 Volts (feedback supply voltage provided by the controller (4) to the power supply will be set back to the reference value).

The method of the invention is not limited to USB connections and can be used in order to keep the output voltage of any data bus which enables communication between a main device (for example, a computer) and a peripheral device connected to this device above a certain threshold value at the point where the peripheral device is connected.

## Claims

1. A method for keeping the output voltage (V_{BUS}) received from the output (3) of a data bus above a specified threshold value in order to provide communication between a main device and a peripheral device connected to the main device, wherein the data bus includes an output (3) for the said peripheral device to be connected, a power supply (1) which provides supply voltage to the said peripheral device, a switch (2) which provides the connection between the said power supply (1) and the said output (3) and various circuitry elements, **characterized by** comprising the steps that:
- a controller (4) connected to said data bus applies a feedback reference voltage to a feedback pin (5) of the said power supply in order to keep the output voltage (V_{OUT}) received from the power supply in the initial state at an initial value;
- said switch (2) sends an error signal to said controller (4) when there is a problem in the communication between the peripheral device and the main device;
- when the controller (4) receives the said error signal, it turns off the said switch (2) and cuts the connection between the said peripheral device and the power supply (1);
- the controller (4) opens the said switch (2) and re-establish the connection;
- the controller (4) detects the data bus output voltage (V_{BUS});
- the controller (4) increases the voltage (V_{OUT}) provided by the power supply (1) when the output voltage of said data bus (V_{BUS}) is below a certain threshold value;
- in the case that communication can not be re-established at the end of these procedures, the controller (4) brings the power supply (1) back to its initial state;
- the controller (4) gives a warning message to the user.

2. A method according to Claim 1, wherein said data bus is a USB data bus.

3. A method according to Claim 2 **characterized in that** the initial value of the said output voltage (V_{OUT}) is 5 Volts.

4. A method according to Claim 2 **characterized in that** said threshold value is 4.75 Volts.

5. A method according to Claim 2 **characterized in that** the controller (4) increases the voltage (V_{OUT}) provided by the power supply (1) to 5.25 Volts when the output voltage of said data bus (V_{BUS}) is below a certain threshold value.

6. A connection circuitry for keeping the output voltage (V_{BUS}) received from the output (3) of a data bus above a specified threshold value in order to provide communication between a main device and a peripheral device connected to the main device and said circuitry comprising said data bus, wherein the data bus includes an output (3) for the said peripheral device to be connected, a power supply (1) which provides supply voltage to the said peripheral device, a switch (2) which provides the connection between the said power supply (1) and the said output (3) and various circuitry elements, **characterized by** comprising:
- a controller (4) connected to said data bus in order to apply a feedback reference voltage to a feedback pin (5) of the said power supply to keep the output voltage received from the power supply (V_{OUT}) in the initial state at an initial value; to cut the connection between the power supply (1) and the said peripheral device by turning off the said switch (2) upon receiving the said error signal; to re-establish the connection by turning on the said switch (2); to detect the data bus output voltage (V_{BUS}); to increase the output voltage (V_{OUT}) provided by the power supply (1) when the output voltage of the said data bus (V_{BUS}) is below a certain threshold; to set the power supply (1) back to its initial state if the communication can not be re-established at the end of this procedure; and to send a warning message to the user
- the said switch (2) being adapted to send an error signal to said controller (4) when there is a problem in the connection between the peripheral device and the main device.

7. A connection circuitry according to Claim 6, wherein said data bus is a USB data bus.

## Patentansprüche

1. Verfahren zum Halten der Ausgangsspannung (V_{BUS}), erhalten von einem Ausgang (3) eines Datenbusses, über einem spezifizierten Durchschnittswert, um eine Datenübertragung zwischen einer Haupteinheit und einer peripheren Einheit, die mit der Haupteinheit verbunden ist, zu schaffen, wobei der Datenbus einen Ausgang (3) für die zu verbindende periphere Einheit, eine Energieversorgung (1), die die periphere Einrichtung mit einer Betriebsspannung versorgt, einen Schalter (2), der die Verbindung zwischen der Energieversorgung (1) und dem Ausgang (3) schafft, und verschiedene Schaltelemente beinhaltet, **gekennzeichnet durch** die Schritte:
- ein Kontroller (4) verbunden mit dem Datenbus legt eine Feedback-Bezugsspannung an einen Feedback-Pin (5) der Energieversorgung an, um die Ausgangsspannung (V_{OUT}) erhalten von der Energieversorgung im anfänglichen Zustand auf einem Anfangswert zu halten,
- der Schalter (2) sendet ein Fehlersignal an den Kontroller (4), wenn ein Problem in der Verbindung zwischen der peripheren Einheit und der Haupteinheit besteht,
- der Kontroller (4), schaltet den Schalter (2) und damit die Verbindung zwischen der peripheren Einheit und der Energieversorgung (1) ab, wenn er das Fehlersignal empfängt,
- der Kontroller (4) öffnet den Schalter (2) und stellt die Verbindung wieder her,
- der Kontroller (4) erfasst die Ausgangsspannung des Datenbusses (V_{BUS}),
- der Kontroller (4) steigert die Spannung (V_{OUT}) gegeben **durch** die Energiezufuhr (1), wenn die Ausgangsspannung des Datenbusses (V_{BUS}) unterhalb eines bestimmten Durchschnittswertes liegt,
- in dem Fall, dass am Ende dieser Prozeduren die Verbindung nicht wiederhergestellt werden kann, bringt der Kontroller (4) die Energiezufuhr (1) zurück in deren anfänglichen Zustand,
- der Kontroller (4) gibt eine Warnnachricht an den Nutzer.

2. Verfahren nach Anspruch 1, **dadurch gekennzeichnet, dass** der Datenbus ein USB-Datenbus ist.

3. Verfahren nach Anspruch 2, **dadurch gekennzeichnet, dass** der Anfangswert der Ausgangsspannung (V_{OUT}) 5 Volt beträgt.

4. Verfahren nach Anspruch 2, **dadurch gekennzeichnet, dass** dieser Durchschnittswert 4,75 Volt beträgt.

5. Verfahren nach Anspruch 2, **dadurch gekennzeichnet, dass** der Kontroller (4) die durch die Energiezufuhr (1) gegebene Spannung (V_{OUT}) auf 5,25 Volt erhöht, wenn die Ausgangsspannung des Datenbusses (V_{BUS}) unterhalb eines bestimmten Durchschnittswertes liegt.

6. Verbindungsschaltung zum Halten der Ausgangsspannung (V_{BUS}), erhalten von dem Ausgang (3) eines Datenbusses, über einem spezifizierten Durchschnittswert, um eine Verbindung zwischen einer Haupteinrichtung und einer peripheren Einrichtung, die mit der Haupteinrichtung und der Schaltung umfassend den Datenbus verbunden ist, zu halten, wobei der Datenbus einen Ausgang (3) zur Verbindung mit der peripheren Einheit, eine Energieversorgung (1), die die periphere Einheit mit einer Betriebsspannung versorgt, einen Schalter (2), der die Verbindung zwischen der Energieversorgung (1) und dem Ausgang (3) schafft, und verschiedene Schaltelemente beinhaltet, **dadurch gekennzeichnet, dass** die Schaltung umfasst:
- einen Kontroller (4), der mit dem Datenbus verbunden ist, um eine Feedback-Bezugsspannung an einen Feedback-Pin (5) der Energieversorgung anzulegen, um die Ausgangsspannung (V_{OUT}), erhalten von der Energieversorgung in dem Anfangszustand auf einem Anfangswert zu halten, um die Verbindung zwischen der Energieversorgung (1) und der peripheren Einheit durch Ausschalten des Schalters (2) nach Empfangen des Fehlersignals zu unterbrechen, um die Verbindung durch Schalten des Schalters (2) wieder aufzubauen, um die Ausgangsspannung des Datenbusses (V_{BUS}) zu erfassen, um die Ausgangsspannung (V_{OUT}), die durch die Energieversorgung (1) bereitgestellt wird, wenn die Ausgangsspannung des Datenbusses (V_{BUS}) unterhalb eines bestimmten Durchschnittswertes liegt, zu steigern, um die Energieversorgung (1) zurück in ihren Anfangszustand zu setzen, falls die Verbindung am Ende dieser Prozedur nicht wieder eingerichtet werden kann, und um eine Warnmitteilung an den Nutzer zu senden,
- wobei der Schalter (2) eingerichtet ist, ein Fehlersignal an den Kontroller (4) zu senden, wenn ein Problem in der Verbindung zwischen der peripheren Einheit und der Haupteinheit vorliegt.

7. Verbindungsschaltung nach Anspruch 6, **dadurch gekennzeichnet, dass** der Datenbus ein USB-Datenbus ist.

## Revendications

1. Procédé pour maintenir la tension de sortie (V_{BUS}) reçue de la sortie (3) d'un bus de données au-dessus d'une valeur seuil spécifiée afin d'assurer une communication entre un dispositif principal et un dispositif périphérique connecté au dispositif principal, dans lequel le bus de données inclut une sortie (3) pour ledit dispositif périphérique à connecter, une alimentation (1) qui fournit une tension d'alimentation audit dispositif périphérique, un interrupteur (2) qui assure la connexion entre ladite alimentation (1) et ladite sortie (3) et divers éléments de circuiterie, **caractérisé en ce qu'**il comprend les étapes dans lesquelles :
- une unité de commande (4) connectée audit bus de données applique une tension de référence de rétroaction à une broche de rétroaction (5) de ladite alimentation afin de maintenir la tension de sortie (V_{OUT}) reçue de l'alimentation dans l'état initial à une valeur initiale ;
- ledit interrupteur (2) envoie un signal d'erreur à ladite unité de commande (4) lorsqu'il existe un problème dans la communication entre le dispositif périphérique et le dispositif principal ;
- lorsque l'unité de commande (4) reçoit ledit signal d'erreur, elle éteint ledit interrupteur (2) et coupe la connexion entre ledit dispositif périphérique et l'alimentation (1) ;
- l'unité de commande (4) ouvre ledit interrupteur (2) et rétablit la connexion ;
- l'unité de commande (4) détecte la tension de sortie de bus de données (V_{BUS}) ;
- l'unité de commande (4) augmente la tension (V_{OUT}) fournie par l'alimentation (1) lorsque la tension de sortie dudit bus de données (V_{BUS}) est en dessous d'une certaine valeur seuil ;
- dans le cas où la communication ne peut pas être rétablie à la fin de ces procédures, l'unité de commande (4) ramène l'alimentation (1) à son état initial ;
- l'unité de commande (4) donne un message d'avertissement à l'utilisateur.

2. Procédé selon la revendication 1, dans lequel ledit bus de données est un bus de données USB.

3. Procédé selon la revendication 2, **caractérisé en ce que** la valeur initiale de ladite tension de sortie (V_{OUT}) est de 5 volts.

4. Procédé selon la revendication 2, **caractérisé en ce que** ladite valeur seuil est de 4,75 volts.

5. Procédé selon la revendication 2, **caractérisé en ce que** l'unité de commande (4) augmente la tension (V_{OUT}) fournie par l'alimentation (1) à 5,25 volts lorsque la tension de sortie dudit bus de données (V_{BUS}) est en dessous d'une certaine valeur seuil.

6. Circuiterie de connexion pour maintenir la tension de sortie (V_{BUS}) reçue de la sortie (3) d'un bus de données au-dessus d'une valeur seuil spécifiée afin d'assurer une communication entre un dispositif principal et un dispositif périphérique connecté au dispositif principal et ladite circuiterie comprenant ledit bus de données, dans laquelle le bus de données inclut une sortie (3) pour ledit dispositif périphérique à connecter, une alimentation (1) qui fournit une tension d'alimentation audit dispositif périphérique, un interrupteur (2) qui assure la connexion entre ladite alimentation (1) et ladite sortie (3) et divers éléments de circuiterie, **caractérisée en ce qu'**elle comprend :
- une unité de commande (4) connectée audit bus de données afin d'appliquer une tension de référence de rétroaction à une broche de rétroaction (5) de ladite alimentation afin de maintenir la tension de sortie (V_{OUT}) reçue de l'alimentation dans l'état initial à une valeur initiale ; pour couper la connexion entre l'alimentation (1) et ledit dispositif périphérique en éteignant ledit interrupteur (2) lors de la réception dudit signal d'erreur ; pour rétablir la connexion en allumant ledit interrupteur (2) ; pour détecter la tension de sortie de bus de données (V_{BUS}) ; pour augmenter la tension de sortie (V_{OUT}) fournie par l'alimentation (1) lorsque la tension de sortie dudit bus de données (V_{BUS}) est en dessous d'un certain seuil ; pour rétablir l'alimentation (1) à son état initial si la communication ne peut pas être rétablie à la fin de cette procédure ; et pour envoyer un message d'avertissement à l'utilisateur
- ledit commutateur (2) étant adapté pour envoyer un signal d'erreur à ladite unité de commande (4) lorsqu'il existe un problème dans la connexion entre le dispositif périphérique et le dispositif principal.

7. Circuiterie de connexion selon la revendication 6, dans laquelle ledit bus de données est un bus de données USB.
